# EUROPEAN PATENT SPECIFICATION

(11) **EP 2 421 081 B1**
(45) Date of publication and mention of the grant of the patent: **15.03.2017**
(21) Application number: 11178046.6
(22) Date of filing: 19.08.2011
(51) Int. Cl.: H01M 10/052, H01M 10/0585, H01M 10/0567

(54) **METHOD FOR MANUFACTURING LARGE FORMAT LITHIUM ION CELLS**
VERFAHREN ZUR HERSTELLUNG GROSSFORMATIGE LITHIUMIONZELLEN
PROCÉDÉ DE FABRICATION DE CELLULE LITHIUM-IONS DE GRAND FORMAT

(30) Priority: 20.08.2010 GB 201013977
(43) Date of publication of application: 22.02.2012
(73) Proprietor: Leclanché S.A., 1400 Yverdon-les-Bains (CH)
(72) Inventor: Blanc, Pierre, 1400 Yverdon-les-Bains (CH); Buqa, Hilmi, 1400 Yverdon-les-Bains (CH); Pettinger, Karl-Heinz, 1400 Yverdon-les-Bains (CH)
(74) Representative: Sonnenberg, Fred

(56) References cited:
- EP-A2- 1 221 733
- WO-A1-01/37295
- WO-A1-2010/004012
- WO-A2-02/091497
- WU M-S ET AL: "ASSESSMENT OF THE WETTABILITY OF POROUS ELECTRODES FOR LITHIUM-ION BATTERIES", JOURNAL OF APPLIED ELECTROCHEMISTRY, SPRINGER, DORDRECHT, NL, vol. 34, no. 8, 1 August 2004 (2004-08-01) , pages 797-805, XP001540801, ISSN: 0021-891X, DOI: 10.1023/B:JACH.0000035599.56679.15
- ZHANG ET AL: "A review on the separators of liquid electrolyte Li-ion batteries", JOURNAL OF POWER SOURCES, ELSEVIER SA, CH, vol. 164, no. 1, 22 December 2006 (2006-12-22), pages 351-364, XP005812627, ISSN: 0378-7753, DOI: 10.1016/J.JPOWSOUR.2006.10.065
- ZHANG ET AL: "A review on electrolyte additives for lithium-ion batteries", JOURNAL OF POWER SOURCES, ELSEVIER SA, CH, vol. 162, no. 2, 22 November 2006 (2006-11-22), pages 1379-1394, XP025084844, ISSN: 0378-7753, DOI: 10.1016/J.JPOWSOUR.2006.07.074 [retrieved on 2006-11-22]
- STEFAN C S ET AL: "Are ionic liquids based on pyrrolidinium imide able to wet separators and electrodes used for Li-ion batteries?", JOURNAL OF POWER SOURCES, ELSEVIER SA, CH, vol. 189, no. 2, 15 April 2009 (2009-04-15), pages 1174-1178, XP026027617, ISSN: 0378-7753, DOI: 10.1016/J.JPOWSOUR.2008.12.114 [retrieved on 2009-01-03]

## Description

The present disclosure relates to rechargeable lithium-ion containing electrochemical cells and batteries and to a manufacturing method thereof. In particular, the present disclosure relates to an electrolyte for a large format electrochemical cell and to a method for filling the electrolyte into the electrochemical cell used in rechargeable lithium-ion containing batteries.

Lithium-ion containing rechargeable batteries, also called lithium ion secondary batteries or lithium ion batteries, are advantageous because of their large capacities, their extended life times, the absence of a memory effect and have been widely used for small sized applications. Lithium containing rechargeable batteries are widely used for many applications, and have shown to be particularly useful in mobile phones, mobile computers and other electronic devices.

The use of the lithium-ion containing rechargeable batteries, however, is today limited to smaller cells with limited capacities. Just few large scale lithium cell batteries have been presented on the market so far, although there is an increasing need for large scale and high capacity lithium batteries, for example for the use in electric vehicles or as energy buffers or storages in green energy power plants, such as solar farms or wind farms. Storage of large amounts of electricity is becoming an increasing need for future energy solutions.

However, manufacturing of large format lithium containing batteries has not been possible in a manner that allow cost effective mass production of the large format lithium cells. Present production processes are very time consuming mainly due to the time consuming filling of the electrolyte into the cell and do not allow a cost-effective production of large format lithium containing electrochemical cells or batteries.

WO 02/091497 describes non-ionic surfactants as additives to the electrolyte in lithium ion batteries. These additives are mainly used for improving impedance properties of the battery. The document does not relate to accelerating the filling of electrolyte into an electrochemical cell.

WO 2010/004012 relates to ion-mobility in ionic-liquid electrolytes. This document suggests the use alkyl sulphates as anionic surfactants in the ionic electrolyte liquids to improve cation mobility.

It is an object of the present invention to improve the manufacturing of electrochemical cells.

### Summary of the Invention

The invention relates to a method for manufacturing a large format rechargeable lithium ion containing electrochemical cell. The method comprises providing at least one anode, at least one cathode and at least one separator between the at least one anode and the at least one cathode, wherein the at least one cathode, the at least one anode and the at least one separator have at least one dimension of 100 mm or more and filling an electrolyte between the anode and the cathode in a single filling step, wherein the electrolyte comprises at least one conductive salt comprising lithium ions, at least one solvent and at least one wetting agent selected from the group comprising fluoropolymers or fluorsurfactants, wherein the concentration of the at least one wetting agent in the electrolyte is 5 ppm to 5000 ppm, wherein filling the electrolyte between the anode and the cathode is performed under vacuum at a pressure of 10 to 500 mbar abs.

Using the wetting agent in the electrolyte allows faster filling of the electrochemical cell. Using the wetting agent in the electrolyte enables filling of large format electrochemical cells, even with small distances between the anode and the cathode. The amount of time necessary for filling the electrolyte in the electrochemical cell between the at least one anode and the at least one cathode is considerably reduced. The use of the wetting agent in the electrolyte allows a homogenous distribution of electrolyte between the at least one anode and the at least on cathode, in particular without gas bubbles or other inhomogenities.

A large format electrochemical cell may have at least one dimension of about 100 mm or more. For example, at least one of a cathode, an anode and a separator between the anode and the cathode may have at least one dimension of about 100 mm or more, for example a surface area of about 0.01 m² or more. The present invention makes the manufacture of much larger electrochemical cells possible.

The at least one anode and the at least one cathode of the electrochemical cell may be arranged at a distance of about 1 mm or less, in particular 0.5 mm or less. The at least one anode and/or the at least one cathode may have a thickness of about 100 µm or less, for example 50 µm or less, thus allowing the manufacture of space and material reduced electrochemical cells with high capacities.

The conductive salt comprising lithium ions may be or may comprise at least one of LiPF6, LiClO4, , LiBF4, LiAsF6 and LiPF3(CF2CF3), Lithium bis [1,2-oxalato(2-)-O,O'] borate (LiBOB) based electrolytes, Lithium tris (pentafluoroethyl) trifluorophosphate Li[(C₂F₅)₃PF₃] short LiFAP, LiF₄C₂O₄, LiFOP, LiPF₄(C₂O₄), LiF₄OP, LiCF₃ SO₃, LiC₄F₉SO₃, Li(CF₃SO₂)₂N, Li(C₂F₅SO₂)₂ N, LiSCN and LiSbF₆, Lithium-trifluormethansulfonat ("Li-Triflat"), Lithiumimide (Lithium-bis (perfluoralkylsulfonyl)-imide) sowie Lithiummethide (Lithium-tris (perfluoralkylsulfonyl) methide), LiIm(BF₃)₂, high voltage LiTDI, LiPDI and LiHDI (lithium salts of 2-perfluoroalkylo-4,5-dicyanoimidazole), LiAlO₄, LiAlCl₄, LiCl and LiI and the like.

The at least one wetting agent may be or may comprise a fluoropolymer. Possible examples for fluoropolymers comprise commercially available perflourinated alkyl ethoxylates such as Zonyl SFO, Zonyl SFN und Zonyl SF300 (E. I. DuPont). Li- thium-3-[(1H,1H,2H,2H-fluoralkyl)thio]-propionat, Zonyl FSA ©, Du Pont). Other fluoropolymers that may be used with the present disclosure comprise semi-fluorinated acryl polymer EGC-1700, Fluoromethacrylate, long-chain perfluoroacrylates, tetrafluorethylene, hexafluoropropylene, silane-coupling agent with perfluoropolyether (PFPE-S), (perfluoroalkyl)ethyl methacrylate-containing acrylic polymers, butyl methacrylate-*co*-perfluoroalkyl acrylate, semifluorinated fluorocarbon diblock copolymer poly(butyl methacrylate-*co*-perfluoroalkyl acrylate), n-perfluorononane, perfluoropropyleneoxyde, polytetrafluoroethylene, poly(tetrafluoroethylene-co-hexafluoropropylene), perfluorobutyl (PFB), perfluoromethyl, perfluoroethyl or a combination thereof.

The at least one wetting agent may be or comprise an ionic surfactant, in particular an anionic surfactant, such as a fluorosurfactant. Commercially available examples of fluorosurfactants that may be used with the present disclosure comprise. but are not limited to, fluorosurfactants distributed by DuPont under the product name Zonyl SFK, Zonyl SF-62 or distributed by 3M Company under the product name FLURAD FC 170, FC 123, or L-18699A. Using an non-ionic surfactant has the advantage of excellent wetting, leveling and flow electrolyte control in a variety organic solvents Non-ionic surfactants drastically lowers surface tension and improve electrode wetting in terms of surface tension reduction at exceedingly low concentrations. In a two-phase system, for example, liquid-liquid or solid-liquid, a surfactant tends to locate at the interface of the two phases, where it introduces a degree of continuity between the two different materials.

Other commercially available products that may be used as fluorosurfactant comprise 3M Company products distributed under the product name Novec F-C4300, 3M FC-4430, 3M FC-4432, or 3M FC-4434.

The at least one wetting agent may be provided in the electrolyte at a final concentration of about 5000 ppm (parts per million) or less, in particular in a concentration of about 500 ppm or less to limit foam formation. (At least one wetting agent may be provided in the electrolyte at a final concentration of about 5 ppm or more, in particular of about 50 ppm or more. These concentrations have been found give good results with respect to fast and homogenous filling of the electrolyte into a pre-assembled cell.

The solvent may be a non-aqueous solvent. The non-aqueous solvent may comprise any combination of ionic liquids. The non-aqueous solvent may comprise at least one of a cyclic carbonate, a cyclic ester, a linear carbonate, ether or a combination thereof. The non-aqueous solvent may be an organic solvent comprising at least one solvent selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), methylpropyl carbonate (MPC), fluoroethylene carbonate (FEC), γ-butyrolactone (GBL), methyl formate, ethyl formate, propyl formate, methyl acetate, ethyl acetate, propyl acetate, pentyl acetate, methyl propionate, ethyl propionate, propyl propionate, butyl propionate, 1,2-butylene carbonate, 2,3-butylene carbonate, 1,2-pentylene carbonate and 2,3-pentylene carbonate or a combination thereof.

### Brief Description of the Figures

The following description gives examples of embodiments of the present disclosure and is made with respect to the attached Figures in a purely exemplifying and non limiting manner, wherein:
Figures 1a and 1b show an example of an electrochemical cell;
Figure 2a shows a second example of an electrochemical cell and Fig 2b shows how electrochemical cells can be stacked to form a battery;
Figure 3 shows filling a battery comprising a plurality of stacked electrochemical cells with electrolyte;
Figure 4 shows the filled battery.

### Detailed Description

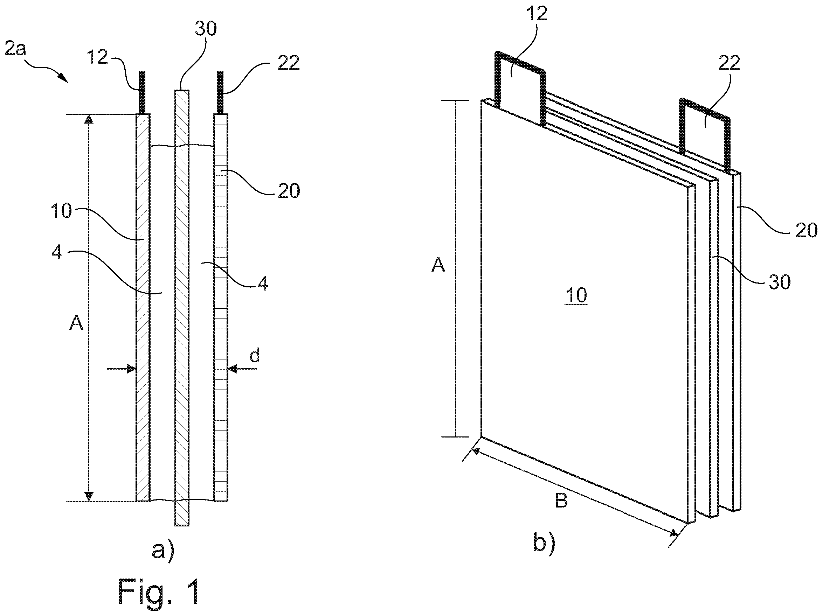

Figure 1 shows an example of an electrochemical cell 2 that can be used with the present disclosure. The electrochemical cell 2 comprises two electrodes, an anode 10, and a cathode 20. The anode 10 and the cathode 20 are separated by a separator 30. The anode 10 and the cathode 20 may be made from any material known in the art of electrochemical cells. For example, the anode 10 may comprise a collector and a carbon or graphite coating or lithium titanate oxide or any other lithium metal alloys, but the anode is not limited to such materials. The collector may be made from copper, aluminium, stainless steel, titanium or any other material known in the art. The cathode 20 may comprise a cathode-collector made from aluminium, stainless steel, titanium or any other material known in the art and may comprise a metal oxide layer such as aluminium oxide or other materials known in the art such as lithium cobalt oxide or other metals oxides, but not limited to such materials.

The anode 10 and the cathode 20 have electrical contacts 12, 22 for electrically contacting the respective electrode.

The separator 30 may be a ceramic separator as known in the art. The invention is, however, not limited to the above materials and any electrode or separator material known, such as for example polyolefin-based or polyester-based materials can be used with the present disclosure.

The electrochemical cell 2a may be a large format electrochemical cell. An electrochemical cell may be called a large format electrochemical cell if at least one of the electrodes 10, 20 and the separator 30 between the electrodes have a length A and/or a width B of at least about 10 cm or more. For example the length A and the width B of the electrodes 10, 20 can be about 10 to about 30 cm. The length A may be different than the width B allowing rectangular shapes or any other shape desired. The shape of the electrode may be adapted to the application of the electrochemical cell or battery and may be adapted to a particular casing.

In the shown example, the distance D between the anode 10 and the cathode 20 is less than 1 mm. For example, the distance between an anode collector of the anode 10 and a cathode connector of the cathode 20 may about 400 µm or less.

Each one of the electrodes 10, 20 of the anode 10 and the cathode 20 may be made of a foil material of a thickness of about less than 50µm. In particular the foils may have a thickness of about 10 to 20 µm. For example, an aluminium foil may be used for the cathode 20 and a copper foil may be used for the anode 10.

The electrochemical cell 2a is filled with an electrolyte 4 that is in contact with the anode 10 and the cathode 20.

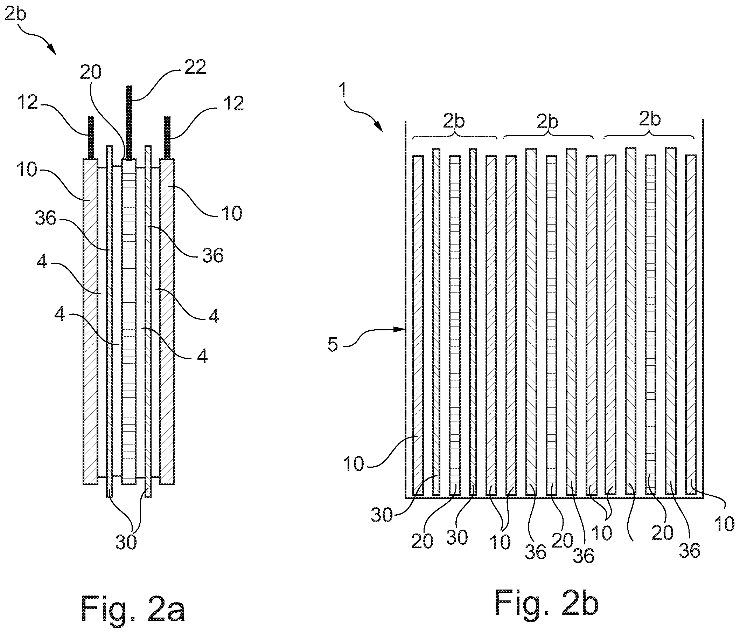

Fig. 2a shows an electrochemical cell 2b that differs from the electrochemical cell 2a in that at both sides of the cathode 20 a separator 30 and an anode 10 are arranged. The electrolyte 4 is inserted between each anode 10 and the cathode 20. This allows closer stacking of the electrochemical cells 2b in a battery 1 and requires less cathode material. The electrical contacts 12, 22 are omitted in the figures for clarity reasons.

A plurality of the electrochemical cells 2a as shown in Figure 1a and 1b or a plurality of electrochemical cells 2b as shown in Figure 2a may be stacked on top of each other to form a rechargeable battery 1. Fig. 2b illustrates how a plurality of electrochemical cells 2b can be stacked in a housing, pack or pouch 5. The number of electrochemical cells 2 stacked can be varied according to the application of the rechargeable battery 1. In the example show, three electrochemical cells 2b are shown for illustrative purposes stacked to form a rechargeable battery 2, but the number of electrochemical cells 2a, 2b can be much higher. For example, a battery 2 may comprise up to about 500 electrochemical cells 2a, 2b.

The electrochemical cells 2a as shown in Figure 1A and 1B may simply be stacked on top of each other and the electrodes 10, 20 may be separated from each other using a separator material.

However, other stacking methods are also possible and applicable with the present invention. Figures 2-4 show electrochemical cells 2b in bicell-configuration. The cell can also be implemented in monocell-configuration, bipolar-configuration, as wound or Z-stacked cell. The active masses or active materials can be coated single-sided or double-sided to the collector. Other stacking methods may be applied as well, such as alternating stacking of anodes and cathodes, each with a separator material in between. By doing this, it is possible to use both surfaces of the anode and of the cathode.

Fig. 2b shows a plurality of electrochemical cells 2b stacked in a package or pouch 5 in bicell-configuration, prior to filling electrolyte into the electrochemical cells 2b.

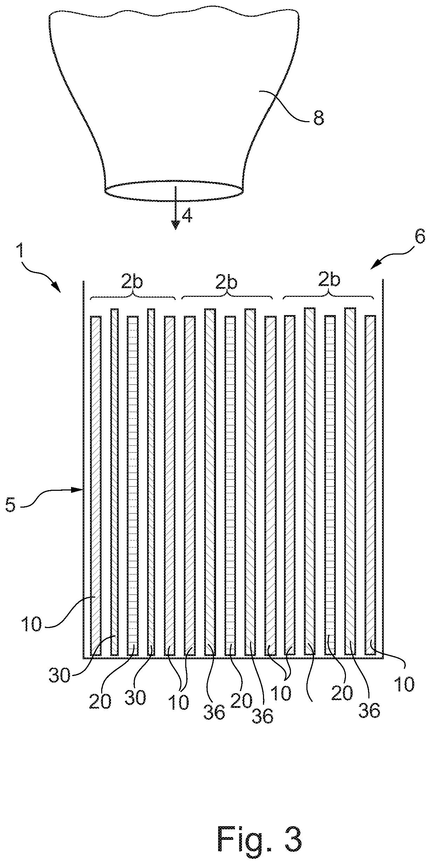

Fig. 3 shows how the electrolyte 4 may be inserted in the electrochemical cells 2a, 2b. The electrochemical cells 2a, 2b may be packed in a pouch 5 that is closed on all sites except the top side 6 using a dosing apparatus 8 such as a needle or the like. Fig. 3 shows a bicell-configuration of three pairs of electrochemical cells 2b, wherein the contacts 12, 22 are omitted for clarity reasons. The dosing apparatus 8 allows inserting an pre-determined amount of electrolyte 4 into the electrochemical cells 2a,2b. Inserting the electrolyte 4 in the electrochemical cells 2a, 2b packed in the pouch 5 may be performed under vacuum conditions, for example at a pressure of about 10 to 500 mbar abs. The electrolyte 4 may be injected from one side only, substantially simplifying the injection procedure.

It is important to have a very homogenous distribution of electrolyte 4 between the anode 10 and the cathode 20, in particular, no bubbles or other errors shall be present between the anode 10 and the cathode 20, as this will lead to undesired defects and less battery capacities. The electrolyte 4 used in lithium containing batteries 1 may comprise a non-aqueous solvent such as, for example, a cyclic carbonate, a cyclic ester, a linear carbonate, an ether, or a combination thereof. Other organic solvents may be used.

The electrolyte 4 for lithium ion batteries 1 also comprises conductive lithium salts such as for example LiClO4, LiPF6, LiBF4, LiAsF6 and LiPF3(CF2CF3), Lithium bis [1,2-oxalato(2-)-O,O'] borate (LiBOB) based electrolytes, LiF₄C₂O₄, LiFOP, LiPF₄(C₂O₄), LiF₄OP, LiCF₃ SO₃, LiC₄F₉SO₃, Li(CF₃SO₂)₂N, Li(C₂F₅SO₂)₂ N, LiSCN and LiSbF₆, LiAlO₄, LiAlCl₄, LiCl and LiI or a combination thereof. Other known lithium salts may be used as well. The salt concentration on the non-aqueous electrolyte may be in the range of about 0.5 to 2.0 mol/L

The electrolyte 4 comprises a wetting agent. The wetting agent is used to homogenously wet the surfaces of the anodes 10, the cathodes 20 and the separator 30 and to obtain a homogeneous distribution of electrolyte 4 inside the electrochemical cells 2a, 2b. The wetting agent also serves for a fast filling of the cell.

The wetting agent also enables a one-way filling from one side. A single filling step is sufficient to wet the entire surfaces of the separator and the electrodes even in large format electrochemical cells having a length A and/or a width B of at least about 10 cm or more.

State of the art cells are usually tempered at temperatures of about 50 to 60 °C for more than 12 hours. It has been found that the tempering times can be reduced to less than about 6 hours if the wetting agent is applied.

The wetting agent may be or may comprise a flouropolymer, in particular a fluorosurfactant. Possible examples for fluoropolymers comprise commercially available perflourinated alkyl ethoxylates such as Zonyl SFO, Zonyl SFN und Zonyl SF300 (E. I. DuPont). Li- thium-3-[(1H,1H,2H,2H-fluoralkyl)thio]-propionat, Zonyl FSA ©, Du Pont)..

Commercially available examples of fluorosurfactants that may be used with the present disclosure comprise but are not limited to fluorosurfactants distributed by DuPont under the product name Zonyl SFK, Zonyl SF-62 or distributed by 3M Company under the product name FLURAD FC 170, FC 123, or L-18699A. Other commercially available product that may be used as fluorosurfactant comprise 3M Company products distributed under the product name Novec F-C4300, 3M FC-4430, 3M FC-4432, or 3M FC-4434.

Other wetting agents that may be used with the present disclosure comprise semi-fluorinated acryl polymer EGC-1700, Fluoromethacrylate, long-chain perfluoroacrylates, tetrafluorethylene, hexafluoropropylene, silane-coupling agent with perfluoropolyether (PFPE-S), (perfluoroalkyl)ethyl methacrylate-containing acrylic polymers, butyl methacrylate-*co*-perfluoroalkyl acrylate, semifluorinated fluorocarbon diblock copolymer poly(butyl methacrylate-*co*-perfluoroalkyl acrylate), n-perfluorononane, perfluoropropyleneoxyde, polytetrafluoroethylene, poly(tetrafluoroethylene-co-hexafluoropropylene), perfluorobutyl (PFB), perfluoromethyl, perfluoroethyl or a combination thereof.

One or more of the above wetting agents may be used alone or in combination. A combination of non-ionic and anionic fluorosurfactants may be applied or non-ionic fluorosurfactant can be used alone.

The wetting agents, fluoropolymers or fluorsurfactants may be used at a concentration of about 5 ppm (parts per million) to about 5000 ppm. These concentrations have been found to give good results with respect to fast and homogenous filling of the electrolyte into a pre-assembled cell. It has been found that a concentration of the wetting agent of more than 0.05% wt electrolyte increases foam formation which reduces wettability.

The use of the wetting agent in the electrolyte results in an even and homogeneous distribution of the electrolyte 4 in the electrochemical cell 2a, 2b. The use of the wetting agent allows reducing the filling times considerably and allows to manufacture large format lithium ion batteries in acceptable time scales suitable for mass production.

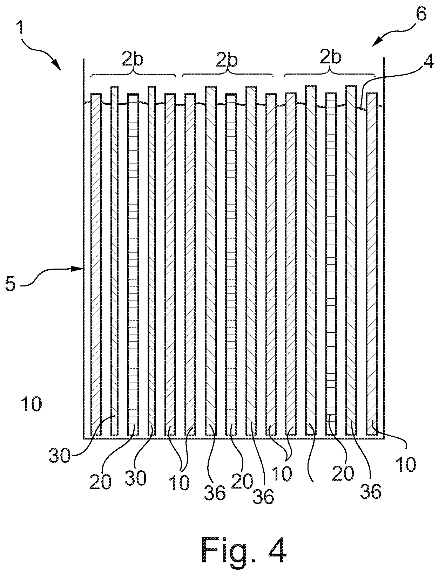

Figure 4 shows a sealed battery pack 1, wherein the opening 6 of the pouch 5 has been closed after filling the battery pack 1 with electrolyte 4 has been completed.

It is obvious to a person skilled in the art that other possibilities than pouches 5 exist to pack the electrochemical cells 2a, 2b. For example, a battery housing from known plastics materials may be used.

It is obvious to a person skilled in the art that a plurality of battery packs 1 may combined to increase the capacity and/or voltage of the battery.

The electrolyte of the present disclosure may be used with any type of electrochemical cells and a person skilled in the art may adapt the properties of the electrolyte to different applications, i.e. to the size and material of the electrochemical cells used.

## Claims

1. A method for manufacturing a large format rechargeable lithium ion containing electrochemical cell (2a, 2b), the method comprising the steps of:
a. providing at least one anode (10), at least one cathode (20) and at least one separator (30) between the at least one anode (10) and the at least one cathode (20), wherein the at least one cathode, the at least one anode and the at least one separator have at least one dimension of 100 mm or more; and
b. filling an electrolyte (4) between the anode (10) and the cathode (20) in a single filling step, the electrolyte comprising:
i. at least one conductive salt comprising lithium ions,
ii. at least one solvent and
iii. at least one wetting agent selected from the group comprising fluoropolymers or fluorsurfactants, wherein the concentration of the at least one wetting agent in the electrolyte is 5 ppm to 5000 ppm,
wherein filling the electrolyte between the anode and the cathode is performed under vacuum at a pressure of 10 to 500 mbar abs.

2. The method of claim 1, wherein the step of filling the electrolyte (4) between the anode (10) and the cathode (20) comprises injecting the electrolyte (4) from one side of the at least one anode (10), the at least one cathode (20) and the at least one separator (30).

3. The method of claim 2, further comprising placing the at least one anode (10), the at least one cathode (20) and the at least one separator (30) in a pouch (5) with one open side and wherein injecting the electrolyte (4) comprises injection the electrolyte (4) through the open side of the pouch (5).

4. The method of any one of claims 1 to 3, wherein the step of providing the at least one anode, the at least one cathode and the at least one separator comprises laminating the at least one anode, the at least one cathode and the at least one separator to each other.

## Patentansprüche

1. Verfahren zur Herstellung einer großformatigen, wiederaufladbaren Lithium Ionen enthaltenden elektrochemischen Zelle (2a, 2b), wobei das Verfahren die folgenden Schritte umfasst:
a. Bereitstellen mindestens einer Anode (10), mindestens einer Kathode (20) und mindestens eines Separators (30) zwischen der mindestens einen Anode (10) und der mindestens einen Kathode (20), wobei die mindestens eine Kathode, die mindestens eine Anode und der mindestens eine Separator mindestens eine Dimension von 100 mm oder mehr aufweisen; und
b. Füllen eines Elektrolyten (4) zwischen der Anode (10) und der Kathode (20) in einem einzigen Füllschritt, wobei der Elektrolyt umfasst:
i. mindestens ein Lithium Ionen umfassendes, leitfähiges Salz;
ii. mindestens ein Lösungsmittel; und
iii. mindestens ein Benetzungsmittel, ausgewählt aus der Gruppe umfassend Fluorpolymere oder Fluortenside, wobei die Konzentration des mindestens einen Benetzungsmittels in dem Elektrolyten 5 ppm bis 5000 ppm beträgt,
wobei das Füllen des Elektrolyten zwischen der Anode und der Kathode unter Vakuum bei einem Druck von 10 bis 500 mbar abs. durchgeführt wird.

2. Verfahren nach Anspruch 1, bei welchem der Füllschritt des Elektrolyten (4) zwischen der Anode (10) und der Kathode (20) ein Injizieren des Elektrolyten (4) von einer Seite der mindestens einen Anode (10), der mindestens einen Kathode (20) und des mindestens einen Separator (30) umfasst.

3. Verfahren nach Anspruch 2, weiter umfassend ein Anordnen der mindestens einen Anode (10), der mindestens einen Kathode (20) und des mindestens einen Separators (30) in einem Beutel (5) mit einer offenen Seite, und wobei das Injizieren des Elektrolyten (4) eine Injektion des Elektrolyten (4) durch die offene Seite des Beutels (5) umfasst.

4. Verfahren nach einem der Ansprüche 1 bis 3, bei welchem der Schritt des Bereitstellens mindestens einer Anode (10), mindestens einer Kathode (20) und mindestens eines Separators (30) ein Laminieren der mindestens einen Anode, der mindestens einen Kathode und des mindestens einen Separators miteinander umfasst.

## Revendications

1. Procédé de fabrication d'une cellule électrochimique (2a, 2b) rechargeable de grand format contenant un ion lithium, le procédé comprenant les étapes consistant à :
a. fournir au moins une anode (10), au moins une cathode (20) et au moins un séparateur (30) entre la au moins une anode (10) et la au moins une cathode (20), dans lequel la au moins une cathode, la au moins une anode et le au moins un séparateur ont au moins une dimension de 100 mm ou plus ; et
b. remplir un électrolyte (4) entre l'anode (10) et la cathode (20) dans une seule étape de remplissage, l'électrolyte comprenant :
i. au moins un sel conducteur comprenant des ions lithium,
ii. au moins un solvant et
iii. au moins un agent mouillant choisi dans le groupe comprenant des fluoro-polymères ou des tensioactifs fluorés, dans lequel la concentration du au moins un agent mouillant dans l'électrolyte est de 5 ppm à 5000 ppm,
dans lequel le remplissage de l'électrolyte entre l'anode et la cathode est effectué sous vide à une pression de 10 à 500 mbar abs.

2. Procédé selon la revendication 1, dans lequel l'étape de remplissage de l'électrolyte (4) entre l'anode (10) et la cathode (20) comprend l'injection de l'électrolyte (4) d'un côté de la au moins une anode (10), la au moins une cathode (20) et le au moins un séparateur (30).

3. Procédé selon la revendication 2, comprenant le placement de la au moins une anode (10), la au moins une cathode (20) et le au moins un séparateur (30) dans une poche (5) avec un côté ouvert et dans lequel l'injection de l'électrolyte (4) comprend l'injection de l'électrolyte (4) à travers le côté ouvert de la poche (5).

4. Procédé selon l'une quelconque des revendications 1 à 3, dans lequel l'étape de fourniture de la au moins une anode, de la au moins une cathode et du au moins un séparateur comprend la lamination l'un ou l'une contre l'autre de la au moins une anode, de la au moins une cathode et du au moins un séparateur.
